# EUROPEAN PATENT APPLICATION

(11) **EP 4 304 119 A1**
(43) Date of publication of application: **10.01.2024**
(21) Application number: 21928478.3
(22) Date of filing: 02.03.2021
(51) Int. Cl.: H04L 5/00

(54) **REFERENCE SIGNAL PROCESSING METHOD AND APPARATUS, COMMUNICATION DEVICE AND STORAGE MEDIUM**

(71) Applicant: Beijing Xiaomi Mobile Software Co., Ltd., Beijing 100085 (CN)
(72) Inventor: LI, Yanhua, Beijing 100085 (CN); JIANG, Xiaowei, Beijing 100085 (CN)
(74) Representative: dompatent von Kreisler Selting Werner - Partnerschaft von Patent- und Rechtsanwälten mbB
(86) International application number: PCT/CN2021/078779
(87) International publication number: WO 2022/183387

(57) **Abstract**

Provided are a reference signal processing method and apparatus, a communication device and a storage medium. The reference signal processing method comprises: sending indication information of at least one reference signal, wherein the indication information is used for indicating an availability status of a configuration of the reference signal (S21). In this way, the availability status of the configuration of the UE reference signal can be notified by the indication information, such that a UE knows whether the configuration of the reference signal is available. Moreover, the situation that the UE misses the indication information for receiving the reference signal can be reduced, and the accuracy of obtaining the availability status of the configuration of the reference signal by the UE can be improved.

## Description

### TECHNICAL FIELD

The disclosure relates to, but is not limited to, the field of communication technology, in particular to a method for processing a reference signal, an apparatus for processing a reference signal, a communication device and a storage medium.

### BACKGROUND

In 3rd Generation Partnership Project (3GPP) standardization for the R17 power saving project in the related art, an additional Tracking Reference Signal (TRS)/Channel State Information- Reference Signal (CSI-RS) is proposed to be used in an idle state to assist a user in acquiring time-frequency domain synchronization with a network. Compared to original Synchronization Signal Block (SSB) synchronization, TRS/CRS configuration can be configured to be closer to a Paging Occasion (PO) time point, while the original SSB is farther away from a PO location, so a User Equipment (UE) needs to wake up long in advance to synchronize with the SSB. However, after adopting the additional TRS/CRS, the UE can wake up later, so it can save more power.

In a system information, an additional TRS/CRS configuration message and availability state information on whether the TRS/CRS is being broadcasted may be broadcast, and may be indicated separately. That is, the TRS/CRS is most likely configured by the network, but not actually transmitted, i.e., the TRS/CRS is not used by a UE in a radio resource control (RRC) idle state or an inactive state. The inconsistency between the configuration information of the TRS/CRS and the availability state information may cause the UE to consume more power or cause a decrease in synchronization accuracy. However, there is currently no feasible way for the UE to correctly acquire an availability indication of the TRS/CRS.

### SUMMARY

The embodiments of the disclosure disclose a method for processing a reference signal, an apparatus for processing a reference signal, a communication device and a storage medium.

According to a first aspect of embodiments of the disclosure, a method for processing a reference signal, performed by a base station, is provided. The method includes:
sending indication information of the reference signal at least once, in which the indication information is configured to indicate an availability state of configuration of the reference signal.

According to a second aspect of embodiments of the disclosure, a method for processing a reference signal, performed by a user equipment, is provided. The method includes:
receiving indication information of the reference signal at least once, in which the indication information is configured to indicate an availability state of configuration of the reference signal.

According to a third aspect of embodiments of the disclosure, an apparatus for processing a reference signal, implemented by a base station, is provided. The apparatus includes:
a sending module, configured to send indication information of the reference signal at least once, in which the indication information is configured to indicate an availability state of configuration of the reference signal.

According to a fourth aspect of embodiments of the disclosure, an apparatus for processing a reference signal, implemented by a UE, is provided. The apparatus includes:
a receiving module, configured to receive indication information of the reference signal at least once, in which the indication information is configured to indicate an availability state of configuration of the reference signal.

According to a fifth aspect of embodiments of the disclosure, a communication device is provided. The communication device includes:
a processor;
a memory for storing instructions executable by the processor; in which
the processor is configured to, when executing the executable instructions, implement the method for processing a reference signal of any embodiment of the disclosure.

According to a sixth aspect of embodiments of the disclosure, a computer storage medium having computer executable programs stored thereon is provided. When the executable programs are executed by a processor, the method for processing a reference signal of any embodiment of the disclosure is implemented.

The technical solutions provided by the embodiments of the disclosure may include the following beneficial effects.

In the embodiment of the disclosure, the base station may send the indication information of the reference signal at least once, in which the indication information is configured to indicate an availability state of configuration of the reference signal. In this way, in the embodiment of the disclosure, the UE may be informed of the availability state of the configuration of the reference signal through the indication information, so that the UE can know whether the configuration of the reference signal is available. Therefore, it is possible to reduce cases in which the UE misses receiving the indication information of the reference signal, and to improve an accuracy of the UE in obtaining the availability state of the configuration of the reference signal. If the reference signal is used for transmission synchronization between the UE and the base station, an accuracy of UE in synchronously monitoring paging can be improved.

Moreover, in the embodiment of the disclosure, the indication information of the reference signal can be sent at least once. If the indication information of the reference signal is sent multiple times, the probability that the UE misses receiving the indication information of the reference signal can be reduced, and it is possible for each UE to receive the correct availability state of the configuration of the reference signal.

It should be understood that the above general description and the following detailed descriptions are exemplary and explanatory only and do not limit the disclosure.

### BRIEF DESCRIPTION OF THE DRAWINGS

FIG. 1 is a schematic diagram illustrating a wireless communication system.
FIG. 2 is a schematic diagram illustrating a method for processing a discontinuous reception (DRX) cycle according to an exemplary embodiment.
FIG. 3 is a schematic diagram illustrating a method for processing a DRX cycle according to an exemplary embodiment.
FIG. 4 is a schematic diagram illustrating a method for processing a DRX cycle according to an exemplary embodiment.
FIG. 5 is a schematic diagram illustrating a method for processing a DRX cycle according to an exemplary embodiment.
FIG. 6 is a schematic diagram illustrating a method for processing a DRX cycle according to an exemplary embodiment.
FIG. 7 is a schematic diagram illustrating a method for processing a DRX cycle according to an exemplary embodiment.
FIG. 8 is a block diagram illustrating an apparatus for processing a DRX cycle according to an exemplary embodiment.
FIG. 9 is a block diagram illustrating an apparatus for processing a DRX cycle according to an exemplary embodiment.
FIG. 10 is a block diagram illustrating a user equipment according to an exemplary embodiment.
FIG. 11 is a block diagram illustrating a base station according to an exemplary embodiment.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of embodiments do not represent all implementations consistent with the disclosure. Instead, they are merely examples of apparatuses and methods consistent with aspects related to the disclosure as recited in the appended claims.

The terms used in the disclosure are only for the purpose of describing specific embodiments, and are not intended to limit the embodiments of the disclosure. The singular forms of "a" and "the" used in the embodiments of the disclosure and appended claims are also intended to include plural forms, unless the context clearly indicates other meanings. It should also be understood that the term "and/or" as used herein refers to and includes any or all possible combinations of one or more associated listed items.

It is understandable that although the terms "first", "second", and "third" may be used in the embodiments of the disclosure to describe various information, the information should not be limited to these terms. These terms are only used to distinguish the same type of information from each other. For example, without departing from the scope of the disclosure, the first information may also be referred to as the second information, and similarly, the second information may also be referred to as the first information. Depending on the context, the term "if' as used herein can be interpreted as "when", "while" or "in response to determining".

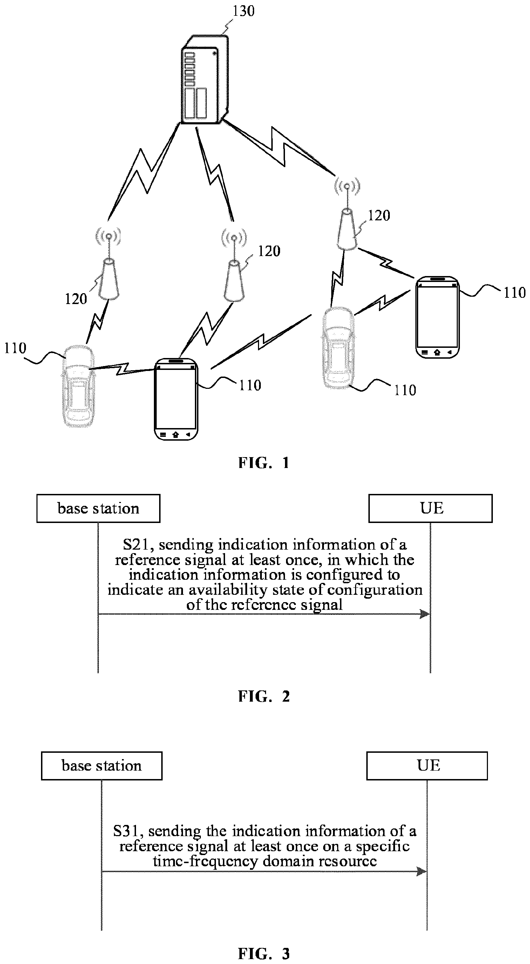

FIG. 1 is a schematic diagram of a wireless communication system provided by an embodiment of the disclosure. As illustrated in FIG. 1, the wireless communication system is a communication system based on cellular mobile communication technology. The wireless communication system may include: a plurality of user equipments (UEs) 110 and a plurality of base stations 120.

The UE 110 may be a device that provides voice and/or data connectivity to a user. The UE 110 may communicate with one or more core networks via a Radio Access Network (RAN). The UE 110 may be an Internet of Things (IoT) UE, such as a sensor device, a cell phone (or "cellular" phone), and a computer with the IoT UE. For example, the UE 110 may be a stationary, portable, pocket-sized, handheld, computer-built, or vehicle-mounted device, such as, a Station (STA), a subscriber unit, a subscriber station, a mobile station, a mobile, a remote station, an access point, a remote terminal, an access terminal, a user terminal, a user agent, a user device, or a UE. Or, the UE 110 may be an unmanned aerial vehicle device. Or, the UE 110 may be an in-vehicle device, for example, an electronic control unit (ECU) having a wireless communication function, or a wireless UE external to the ECU. Or, the UE 110 can also be a roadside device, for example, a street light, a signal light, or other roadside devices having wireless communication function.

The base station 120 may be a network side device in the wireless communication system. The wireless communication system may be the 4th Generation (4G) mobile communication system, also known as a Long Term Evolution (LTE) system. Or, the wireless communication system may also be a 5G system, also known as New Radio (NR) system or 5G NR system. Or, the wireless communication system may be any next generation system of the 5G system. The access network in the 5G system may be called New Generation-RAN (NG-RAN).

The base station 120 can be an evolved base station (eNB) employed in the 4G system. Or, the base station 120 may be a base station (gNB) with a centralized distributed architecture employed in the 5G system. When the base station 120 adopts the centralized distributed architecture, it usually includes a Central Unit (CU) and at least two Distributed Units (DUs). The CU is equipped with protocol stacks of a Packet Data Convergence Protocol (PDCP) layer, a Radio Link Control (RLC) layer, or Media Access Control (MAC) layer. The DU is equipped with the protocol stack of the physical (PHY) layer, and the specific implementation of the base station 120 is not limited in the embodiment of the disclosure.

A wireless connection can be established between the base station 120 and the UE 110 via a radio interface. In different implementations, the radio interface is a radio interface based on the 4G standard. Or, the radio interface is a radio interface based on the 5G standard, such as a NR. Or, the radio interface may also be a radio interface based on the standard of the next generation of 5G.

In some embodiments, an End to End (E2E) connection can also be established between the UEs 110 in scenarios, such as, Vehicle to Vehicle (V2V) communication, Vehicle to Infrastructure (V2I) communication, and Vehicle to Pedestrian (V2P) communication in Vehicle to Everything (V2X) communication.

The above UE may be considered to be a terminal device in the following embodiments.

In some embodiments, the above wireless communication system may also include a network management device 130.

The plurality of base stations 120 are connected to the network management device 130 respectively. The network management device 130 may be a core network device in the wireless communication system, for example, a Mobility Management Entity (MME) in an Evolved Packet Core (EPC). Or, the network management device may be another core network devices, such as a Serving GateWay (SGW), a Public Data Network GateWay (PGW), a Policy and Charging Rules Function (PCRF), or a Home Subscriber Server (HSS), etc. The implementation form of the network management device 130 is not limited in the embodiments of the disclosure.

In order to better understand the technical solutions described in any embodiment of the disclosure, firstly, part of description of a mechanism for sending an available indication for the TRS/CRS is provided.

In an embodiment, configuration information of a Tracking Reference Signal (TRS) or Channel State Information-Reference Signal (CRS) and an availability state of configuration of the TRS/CRS are broadcasted via the system information. The availability state of the configuration of the TRS/CRS is state information on whether the configuration of the TRS/CRS is being broadcasted. In this embodiment, the configuration information of the TRS/CRS, and the availability state of the configuration of the TRS/CRS are indicated separately. That is, it is likely that the TRS/CRS is configured by the network, but the TRS/CRS is not actually broadcasted (i.e., it is not available to a user in the idle state).

It is understandable that the UE usually needs valid configuration of the TRS/CRS to determine how to synchronize the UE and the network. The inconsistency between the configuration information of the TRS/CRS and information on whether it is transmitted by the network may cause major problems. For example, if the network transmits valid configuration information of the TRS/CRS, but the UE believes that it is not, the UE may use the original SSB synchronization method to perform paging, which may result in high power consumption. For example, if the network stops transmitting the valid configuration information of the TRS/CRS, while the UE still synchronizes according to the original configuration of the TRS/CRS, the synchronization accuracy may be degraded. Moreover, there is a difference between a change frequency of the configuration of the TRS/CRS and a change frequency of the available state of the configuration of the TRS/CRS. For example, the change frequency of the configuration of the TRS/CRS may be less than the change frequency of the available state of the configuration of the TRS/CRS, thus the network may often need to update the available state of the TRS/CRS without updating the configuration of the TRS/CRS.

In another embodiment, the network sends the available state of the configuration of the TRS/CRS via a physical layer signaling. The physical layer signaling may be a paging downlink control information (DCI). In this embodiment, if the network notifies the UE of the available state of the TRS/CRS via the physical layer signaling before sending a paging message, and sends an actual paging message afterwards, the UE can perform synchronization of monitoring the paging.

However, in the above embodiment, it fails to enable various UEs to correctly obtain the available state of the TRS/CSR, thus the UE may miss monitoring the paging, which degrades the transmission synchronization between the UE and the network significantly.

As illustrated in FIG. 2, a method for processing a reference signal, performed by a base station, is provided. The method includes the following steps.

At step S21, indication information of the reference signal is sent at least once, in which the indication information is configured to indicate an availability state of configuration of the reference signal.

In an embodiment, the base station may be an interface device for a UE to access the Internet. The base station may be various types of base stations, such as, a 3G base station, a 4G base station, a 5G base station, or other evolved base stations.

In an embodiment, the UE may be various types of mobile terminals or fixed terminals. For example, the UE may be, but is not limited to, a cell phone, a computer, a server, a wearable device, a game control platform, or a multimedia device.

In an embodiment, the UE is an unconnected-state UE. The unconnected-state UE includes: a UE in an RRC idle state and/or a UE in an RRC inactive state.

In an embodiment, the reference signal is used for transmission synchronization between the UE and the base station.

In an embodiment, the reference signal includes, but is not limited to, at least one of the followings:
a TRS; and
a CSI-RS.

In this way, in the embodiment of the disclosure, the indication information of the TRS may be sent by the base station to inform the UE of the availability state of the configuration of the TRS. Or, the indication information of the CSI-RS may be sent by the base station to inform the UE of the availability state of the configuration of the CSI-RS, which may enable the UE to obtain the correct availability state of the TRS/CSI, and greatly reduce the probability of the UE missing monitoring synchronously.

In an embodiment, the configuration of the reference signal can be, but is not limited to, configuring TRS by the base station, or configuring CSI-RS by the base station.

In an embodiment, the availability state of the configuration of the reference signal includes one of the followings:
an available state;
an unavailable state;
a transition from the available state to the unavailable state; and
a transition from the unavailable state to the available state.

In an embodiment, the indication information of the reference signal is configured to indicate one of the followings of the reference signal:
the configuration of the reference signal being available;
the configuration of the reference signal being un available; and
the configuration of the reference signal changing from the available state to the unavailable state; and
the configuration of the reference signal changing from the unavailable state to the available state.

In this way, in the embodiment of the disclosure, through scenarios in which the base station sends the indication information of multiple application scenarios in which the configuration of the reference signal is in the available state, the configuration of the reference signal is in the unavailable state, the configuration of the reference signal changes from the available state to the unavailable state, or the configuration of the reference signal changes from the unavailable state to the available state, to the UE, the UE can know actual transmission condition of the configuration of the reference signal such as the TRS/CSI-RS in different application scenarios, which facilitates the UE to monitor the paging synchronously.

A method for processing a reference signal provided by an embodiment of the disclosure, performed by a base station, may include: broadcasting indication information of the reference signal at least once. In this way, in the embodiment of the disclosure, the base station broadcasts the indication information of the reference signal at least once, so that each UE can receive the indication information of the reference signal, improving the probability that each UE receives the correct availability state of the configuration of the reference signal.

A method for processing a reference signal provided by an embodiment of the disclosure, performed by a base station, may include: sending indication information of the reference signal once.

A method for processing a reference signal provided by an embodiment of the disclosure, performed by a base station, may include: sending indication information of the reference signal multiple times, in which the indication information of the reference signal that are sent multiple times are identical. In this way, in the embodiment of the disclosure, the probability that the UE receives the correct availability state of the configuration of the reference signal can be improved.

In an embodiment, the indication information is carried in at least one indication bit. In another embodiment, the indication information is carried in a plurality of indication bits.

In an embodiment, one indication bit carries indication information of one reference signal. The one indication bit herein may carry indication information of the availability state of the configuration of one reference signal.

In another embodiment, one indication bit carries indication information of each reference signal of a plurality of reference signals.

The indication bit herein may be an indication bit of a message carrying the indication information of the reference signal. For example, the indication bit may be an indication bit of a paging early indication (PEI) that carries the indication information of the reference signal. Or, it may be an indication bit of a paging DCI that carries the indication information of the reference signal.

The indication bit may be a preset indication bit or an indication bit with an undefined meaning. For example, it may be agreed by a protocol that the indication information of the reference signal is carried by a certain preset indication bit of the paging DCI, or the indication information of the reference signal is carried by the indication bit with the undefined meaning in the paging DCI.

For example, if the base station needs to send indication information of one TRS, the base station sends a paging DCI, and a preset indication bit of the paging DCI carries the indication information of one TRS.

For example, if the base station needs to send indication information of one TRS, the base station sends a paging DCI, and a plurality of preset indication bits of the paging DCI carry the indication information of each TRS of a plurality of TRSs respectively.

For example, if the base station needs to send indication information of one TRS and indication information of two CSI-RSs, which are indication information of a first TRS, indication information of a second CSI-RS, and indication information of a third CSI-RS respectively, the base station sends a paging DCI. A first preset indication bit of the paging DCI carries the indication information of the first TRS, a second preset indication bit of the paging DCI carries the indication information of the second CSI-RS, and a third preset indication bit of the paging DCI carries the indication information of the third CSI-RS.

In the embodiment of the disclosure, the base station may send the indication information of the reference signal at least once, in which the indication information is configured to indicate the availability state of configuration of the reference signal. For example, the reference signal is used for transmission synchronization between the UE and the base station. In this way, in the embodiment of disclosure, the UE is informed of the availability state of the configuration of the reference signal via the indication information, so that the UE can know whether the configuration of the reference signal is available or not, thereby improving the accuracy of the UE in obtaining the availability state of the configuration of the reference signal, and improving the synchronization accuracy of UE in synchronously monitoring the paging.

Moreover, in the embodiment of the disclosure, the indication information of the reference signal can be sent at least once. If the indication information of the reference signal is sent multiple times, the probability that the UE misses receiving the indication information of the reference signal can be reduced, and it is possible for each UE to receive the correct availability state of the configuration of the reference signal.

It is noted that those skilled in the art may understand that the method provided by the embodiment of the disclosure may be performed alone or in combination with some methods in the embodiments of the disclosure or some methods in the related art.

As illustrated in FIG. 3, a method for processing a reference signal, performed by a base station, is provided. The method includes the following steps.

At step S31, indication information of a reference signal is sent at least once on a specific time-frequency domain resource.

In some embodiments of the disclosure, the reference signal may be the reference signal described at step S21, and the indication information may be the indication information described at step S21.

In an embodiment, the specific time-frequency domain resource is a prespecified time-frequency domain resource.

In an embodiment, the specific time-frequency domain resource may be a time-frequency domain resource before sending a paging DCI or a PEI. For example, if the paging DCI is sent on the fifth symbol of the first slot on a physical downlink control channel (PDCCH), the indication information of the reference signal may be sent on the first, second, third or fourth time-frequency domain resource of the first slot on the PDCCH.

In another embodiment, the specific time-frequency domain resource may be a time-frequency domain resource before sending a paging message.

In another embodiment, the specific time-frequency domain resource may be a time-frequency domain resource before a PO.

Certainly, in other embodiments, the specific time-frequency domain resource may also be any other time-frequency domain resource or any other time-frequency domain resource that can satisfy before the UE receives the paging message. For example, the specific time-frequency domain resource may be a time-frequency domain resource when the base station has a relatively small traffic volume.

In an embodiment, the specific time-frequency domain resource is configured periodically. In this way, in the embodiment of the disclosure, since the specific time-frequency domain resource is configured periodically, the indication information of the reference signal may be sent periodically, which can reduce the probability that the UE misses receiving the indication information of the reference signal.

In an embodiment, step S31 may also be: sending the indication information of the reference signal at least once on a specific time-frequency domain resource in each cycle.

For example, by setting every 320ms as one cycle and determining that a range from the 1^{st} ms to the 20^{th} ms in each 320ms is a specific time-frequency domain resource, the base station can send the indication information of the reference signal once in the range from the 1^{st} ms to the 20^{th} ms in each 320ms.

In this way, in the embodiment of the disclosure, the indication information of the reference signal can be sent periodically on the specific time-frequency domain resource, so that the probability that the UE can receive the correct availability state of the configuration of the reference signal can be improved, and the probability that the UE misses the paging message can be greatly reduced.

In another embodiment, step S31 may also be: sending the indication information of the reference signal multiple times on a specific time-frequency domain resource in each cycle, in which the indication information of the reference signal that are sent multiple times are identical.

For example, by setting every 320ms as one cycle and determining that a range from the 1^{st} ms to the 100^{th} ms in each 320ms is a specific time-frequency domain resource, the base station can send the indication information of the reference signal once in a range from the 1^{st} ms to 20^{th} ms, a range from the 21^{st} ms to 40^{th} ms, a range from the 41^{st} ms to the 60^{th} ms, a range from the 61^{st} ms to the 80^{th} ms and a range from the 81^{st} ms to the 100^{th} ms of each 320ms.

For example, by setting every 320ms as one cycle and determining that each 320ms is a specific time-frequency domain resource, the base station can send the indication information of the reference signal multiple times at every 20ms interval in each 320ms.

In this way, in the embodiment of the disclosure, the indication information of the reference signal can be sent periodically on the specific time-frequency domain resource, so that the probability that the UE can receive the correct availability state of the configuration of the reference signal can be improved, and the probability that the UE misses the paging message can be greatly reduced. Moreover, since the indication information of the reference signal can be sent repeatedly for multiple times in each cycle, the probability that the UE receives the correct availability state of the configuration of the reference signal can be further improved, which in turn further reduces the probability that the UE misses the paging message and improves the accuracy of the UE when synchronously monitoring the paging message.

A method for processing a reference signal provided by an embodiment of the disclosure, performed by a base station, may include: sending a system information, in which the system information carries resource information of the specific time-frequency domain resource. In this way, in the embodiment of the disclosure, the base station can send the system information that carries the resource information of the specific time-frequency domain resource to the UE, to inform the UE of the specific time-frequency domain resource on which the indication information of the reference signal is received, thereby improving the probability that the UE receives the indication information of the reference signal.

A method for processing a reference signal provided by an embodiment of the disclosure, performed by a base station, may include: sending a physical layer signaling that carries the indication information of the reference signal. In this way, in the embodiment of the disclosure, the base station can send the indication information of the reference signal via the physical layer signaling, to indicate whether the configuration of the reference signal is currently being transferred. In this way, it can be applied to more application scenarios.

A method for processing a reference signal provided by an embodiment of the disclosure, performed by a base station, may include: sending a paging DCI, in which the paging DCI carries the indication information of the reference signal. In this way, in the embodiment of the disclosure, the indication information of the reference signal can be sent using the paging DCI.

A method for processing a reference signal provided by an embodiment of the disclosure, performed by a base station, may include: sending a PEI, in which the PEI carries the indication information of the reference signal. In this way, in the embodiment of the disclosure, the indication information of the reference signal can be sent using the PEI.

A method for processing a reference signal provided by an embodiment of the disclosure, performed by a base station, may include: sending a PDCCH in a preset format, in which the PDCCH in the preset format carries the indication information of the reference signal.

In an embodiment, the PDCCH in the preset format may be a PDCCH in a new format. For example, the format of the PDCCH may include DCI0, DCI1, DCI1A, DCI1B, DCI2, DCI2A, DCI3, or DCI4, thus a new DCI format, such as DCI5 or DCI5A, may be defined based on the specification agreements, to carry the indication information of the reference signal. Certainly, in other embodiments, it is also possible to simply define a new format for the DCI of the PDCCH, or other formats for other DCI, as long as it is able to carry the indication information of the reference signal for transmission, and the preset format of the PDCCH is not limited herein.

In this way, in the embodiment of the disclosure, a new PDCCH format can be introduced to send the indication information of the reference signal, which can be applied to more scenarios in which the base station sends the availability state of the configuration of the reference signal, and the UE receives the availability state of the configuration of the reference signal correctly.

A method for processing a reference signal provided by an embodiment of the disclosure, performed by a base station, may include: sending a physical layer signaling that carries the indication information of the reference signal at least once on the specific time-frequency domain resource.

The method for processing a reference signal provided by the embodiment of the disclosure, performed by the base station, may include, but is not limited to, one of:
sending a paging DCI at least once on the specific time-frequency domain resource, in which the paging DCI carries the indication information of the reference signal;
sending a PEI at least once on the specific time-frequency domain resource, in which the PEI carries the indication information of the reference signal; and
sending a PDCCH in a preset format at least once on the specific time-frequency domain resource, in which the PDCCH in the preset format carries the indication information of the reference signal.

In this way, in the embodiment of the disclosure, the indication information of the reference signal can be sent not only using the paging DCI, the PEI, or the PDCCH in the preset format, but also sent on the specific time-frequency domain resource, so that the UE can receive the indication information of the reference signal before detecting the paging, i.e., the UE can receive the correct availability state of the configuration of the reference signal, thereby improving the accuracy of the UE in monitoring the paging.

The method for processing a reference signal provided by the embodiment of the disclosure, performed by the base station, may include: sending the physical layer signaling that carries the indication information of the reference signal repeatedly on the specific time-frequency domain resource in each cycle.

The method for processing a reference signal provided by the embodiment of the disclosure, performed by the base station, may include, but is not limited to, one of:
sending a paging DCI multiple times on the specific time-frequency domain resource in each cycle, in which the paging DCI carries the indication information of the reference signal;
sending a PEI multiple times on the specific time-frequency domain resource in each cycle, in which the PEI carries the indication information of the reference signal; and
sending a PDCCH in a preset format multiple times on the specific time-frequency domain resource in each cycle, in which the PDCCH in the preset format carries the indication information of the reference signal.

In this way, in the embodiment of the disclosure, the system information or the physical layer signaling that carries the indication information of the reference signal can be sent periodically on the specific time-frequency domain resource, to improve the probability that the UE can receive the correct availability state of the configuration of the reference signal, thus greatly reducing the probability that the UE misses the paging message. Moreover, since the physical layer message that carries the indication information of the reference signal can be sent repeatedly for multiple times in each cycle, the probability that the UE receives the correct availability state of the configuration of the reference signal can be further improved, which in turn further reduces the probability that the UE misses the paging message and improves the accuracy of the UE when synchronously monitoring the paging message.

In some embodiments, step S21 may include: sending the indication information of the reference signal at least once on the specific time-frequency domain resource.

In some embodiments, step S31 includes: sending a physical layer signaling that carries the indication information of the reference signal.

In some embodiments, sending the physical layer signaling that carries the indication information of the reference signal includes, but is not limited to, one of:
sending a paging DCI, in which the paging DCI carries the indication information of the reference signal;
sending a PEI, in which the PEI carries the indication information of the reference signal; and
sending a PDCCH in a preset format, in which the PDCCH in the preset format carries the indication information of the reference signal.

In the embodiment of the disclosure, the base station can send the indication information of the reference signal on the specific time-frequency domain resource, which enables the UE to receive the correct availability state of the configuration of the reference signal. Moreover, the base station transmits the indication information on the specific time-frequency domain resource, which enables the UE to receive the indication information of the reference signal before detecting the paging since i.e., to receive the correct availability state of the configuration of the reference signal, thereby improving the accuracy of the UE in monitoring the paging.

It is noted that those skilled in the art can understand that the method provided by the embodiment of the disclosure may be performed alone or in combination with some methods in the embodiments of the disclosure or some methods in the related art.

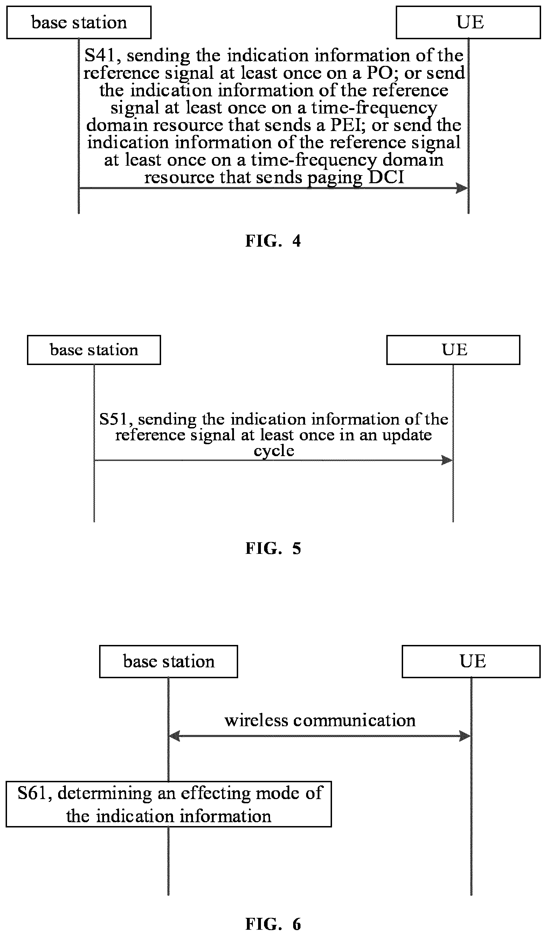

As illustrated in FIG. 4, a method for processing a reference signal, performed by a base station, is provided. The method includes the following steps.

At step S41, the indication information of the reference signal is sent at least once at a PO; or the indication information of the reference signal is sent at least once on a time-frequency domain resource that sends a PEI; or the indication information of the reference signal is sent at least once on a time-frequency domain resource that sends a paging DCI.

In some embodiments of the disclosure, the reference signal may be the reference signal described at step S21, and the indication information may be the indication information described at step S21.

In an embodiment, the PO is an existing PO of the UE. In this way, in the embodiment of the disclosure, the base station sends the indication information of the reference signal only at a specific PO of the UE, thereby improving the probability that the UE receives the indication information of the reference signal.

The method for processing a reference signal provided by the embodiment of the disclosure, performed by the base station, may include: sending a PEI on a time-frequency domain resource that sends the PEI, in which the PIE carries the indication information of the reference signal. In this way, in the embodiment of the disclosure, the base station may send the indication information of the reference signal only in an existing PEI. Therefore, it is possible to reuse the PEI, thus reducing the transmission of signaling, and saving system transmission resources and saving power consumption of the UE.

The method for processing a reference signal provided by the embodiment of the disclosure, performed by the base station, may include: sending a paging DCI on a time-frequency domain resource that sends the paging DCI, in which the paging DCI carries the indication information of the reference signal. In this way, in the embodiment of the disclosure, the base station sends the indication information of the reference signal only in an existing paging DCI, thus the paging DCI can be reused, which can reduce the transmission of signaling, save the system transmission resources and save the power consumption of the UE.

In an embodiment, the indication information of the reference signal can be carried in a preset indication bit of the existing paging DCI, thus the paging DCI carrying the indication information of the reference signal may be considered as an extended paging DCI. In an embodiment, the indication information of the reference signal can be carried in a preset indication bit of the existing PEI, the PEI carrying the indication information of the reference signal may be considered as an extended PEI.

The method for processing a reference signal provided by the embodiment of the disclosure, performed by the base station, may include: sending a short message, in which the short message carries the indication information of the reference signal. For example, the indication information of the reference signal is carried in a preset indication bit of the short message.

In an embodiment, the short message is a special format of the paging DCI. Certainly, in other embodiments, the short message may also be a special format of the PEI.

The method for processing a reference signal provided by the embodiment of the disclosure, performed by the base station, may include: sending a PEI or a paging DCI scrambled by a paging radio network temporary identifier (P-RNTI) of a preset type, in which the PEI or the paging DCI carries the indication information of the reference signal.

In an embodiment, the P-RNTI of the preset type is a new P-RNTI predefined according to the specification. For example, the new P-PRNT may be a TRS-RNTI.

In an embodiment, the PEI is scrambled by the P-RNTI of the preset type, or, the paging DCI is scrambled by the P-RNTI of the preset type.

In this way, in the embodiment of the disclosure, the paging DCI or the PEI scrambled by the P-RNTI of the preset type can be used to carry the indication information of the reference signal for transmission. Therefore, the paging DCI or the PEI can be used to inform the UE of the availability state of the configuration of the reference signal, and the paging DCI or the PEI can also be reused to inform the UE of a type of network that sends the paging, thus saving the system transmission resources and saving the power consumption of the UE.

In some embodiments, step 21 includes, but is not limited to, one of:
sending the indication information of the reference signal at least once at a PO;
sending the indication information of the reference signal at least once on a time-frequency domain resource that sends a PEI;
sending the indication information of the reference signal at least once on a time-frequency domain resource that sends a paging DCI;
sending a short message, in which the short message carries the indication information of the reference signal; and
sending a PEI or paging DCI scrambled by a P-RNTI of a preset type, in which the PEI or the paging DCI carries the indication information of the reference signal.

In the embodiment of the disclosure, the base station can send the indication information of the reference signal at the existing PO, on the time-frequency domain resource that sends the PEI, or on the time-frequency domain resource that sends the paging DCI to the UE, so that the UE can receive the indication information of the reference signal at the existing PO, on the time-frequency domain resource that sends the PEI, or on the time-frequency domain resource that sends the paging DCI, so that the probability that the UE receives the indication information of the reference signal can be improved. Moreover, in the embodiment of the disclosure, if the indication information of the reference signal is sent using the existing PEI or the existing paging DCI, the PEI or the paging DCI can be reused, thereby saving the system transmission resources and saving the power consumption of the UE.

It is noted that those skilled in the art can understand that the method provided by the embodiment of the disclosure may be performed alone or in combination with some methods in the embodiments of the disclosure or some methods in the related art.

As illustrated in FIG. 5, a method for processing a reference signal, performed by a base station, is provided. The method includes the following steps.

At step S51, the indication information of the reference signal is sent at least once in one update cycle.

In some embodiments of the disclosure, the reference signal may be the reference signal described at step S21, and the indication information may be the indication information described at step S21.

In an embodiment, the update cycle is a preset cycle according to the specification. For example, the update cycle is a preset update cycle, which may be, for example, 320ms, 400ms and 640ms.

In another embodiment, the update cycle is N times as long as a system information modification cycle, in which N is an integer greater than 0. For example, the update cycle is identical to the system information modification cycle, or the update cycle is twice of the system information modification cycle. In this way, in the embodiment of the disclosure, the update cycle for sending the indication information of the reference signal can be set according to the system information modification cycle, thereby facilitating sending the indication information of the reference signal based on the system information.

In another embodiment, the update cycle can be an availability update cycle of the configuration of the reference signal. For example, the update cycle may be identical to the availability update cycle of the reference signal. For example, if the availability state of the configuration of the reference signal at the first 320ms is available, and the availability state at the second 320ms is unavailable, the update cycle may be configured to be 320ms. In this way, in the embodiment of the disclosure, the update cycle for sending the indication information of the reference signal can be determined based on a cycle of updating the availability state of the configuration of the reference signal. That is, a frequency of sending the indication information of the reference signal may be determined based on a frequency of change in availability of the configuration of the reference signal. Therefore, the UE can receive the correct availability state of the configuration of the reference signal, and the power consumption of the UE can be saved.

Certainly, in other embodiments, the update cycle may also be set directly as the update cycle of the configuration of the reference signal.

The method for processing a reference signal provided by the embodiment of the disclosure, performed by the base station, may include: sending the indication information of the reference signal on at least one preset time-frequency domain resource in one update cycle.

For example, there is a preset time-frequency domain resource within an update cycle. If the 1^{st} ms to the 20^{th} ms in an update cycle of 640ms is the preset time-frequency domain resource, the base station may send the indication information of the reference signal once in a range from the 1^{st} ms to the 20^{th} ms.

For example, there is a preset time-frequency domain resource within an update cycle. If the 1^{st} ms to the 100^{th} ms in an update cycle of 640ms is the preset time-frequency domain resource, the base station may send the indication information of the reference signal once in at least one of a range from the 1^{st} ms to the 20^{th} ms, a range from the 21^{st} ms to the 40^{th} ms, a range from the 41^{st} ms to the 60^{th} ms, a range from the 61^{st} ms to the 80^{th} ms, and a range from the 81^{st} ms to the 100^{th} ms, or the base station may send the indication information of the reference signal once in both a range from the 31^{st} ms to the 50^{th} ms and a range from the 51^{st} ms to the 70^{th} ms respectively.

For example, there are two preset time-frequency domain resources within an update cycle. For example, there are two preset time-frequency domain resources in an update cycle of 640ms, a range from the 1^{st} ms to the 100^{th} ms is the first preset time-frequency domain resource, and a range from the 500^{th} ms to 600^{th} ms is the second preset time-frequency domain resource. The base station may send the indication information of the reference signal one or more times on the first preset time-frequency domain resource, i.e., on the range from the 1^{st} ms to the 100^{th} ms, or send the indication information of the reference signal one or more times on the second preset time-frequency domain resource, i.e., on the range from the 500^{th} ms to the 600^{th} ms.

The method for processing a reference signal provided by the embodiment of the disclosure, performed by the base station, may include: sending the indication information of the reference signal on at least one PO in an update cycle.

For example, if there is one PO in an update cycle, the base station can send the indication information of the reference signal on the PO.

For example, if there is a plurality of POs in an update cycle, the base station can send the indication information of the reference signal on at least one PO or at least two POs in the plurality of POs.

The method for processing a reference signal provided by the embodiment of the disclosure, performed by the base station, may include: sending the indication information of the reference signal on at least one time-frequency domain resource that sends the PEI within an update cycle.

For example, if there is one time-frequency domain resource that sends the PEI within the update cycle, the base station can send the indication information of reference signal on the time-frequency domain resource of the PEI.

For example, if there is a plurality of time-frequency domain resources that send the PEI in the update cycle, the base station can send the indication information of the reference signal on at least one time-frequency domain resource or at least two time-frequency domain resources in the plurality of time-frequency domain resources that send the PEI.

The method for processing a reference signal provided by the embodiment of the disclosure, performed by the base station, may include: sending the indication information of the reference signal on at least one time-frequency domain resource that sends a paging DCI within an update cycle.

For example, if there is one time-frequency domain resource that sends the paging DCI within the update cycle, the base station can send the indication information of reference signal on the time-frequency domain resource that sends the paging DCI.

For example, if there is a plurality of time-frequency domain resources that send the paging DCI in the update cycle, the base station can send the indication information of the reference signal on at least one time-frequency domain resource or at least two time-frequency domain resources in the plurality of time-frequency domain resources that send the paging DCI.

In this way, in the embodiment of the disclosure, the indication information of reference signal may be sent based on one update cycle, so that the UE can receive the correct availability state of the configuration of the reference signal in one update cycle, and the indication information of the reference signal can take effect in the next update cycle.

In some embodiments, the indication information of the reference signal that are sent multiple times in an update cycle are identical. For example, the base station sends the indication information of the reference signal multiple times in one update cycle, and the indication information of the reference signal sent for multiple times are identical. In this way, in the embodiment of the disclosure, since the indication information of the reference signal is sent for multiple times in one cycle, the probability that each UE receives the correct availability state of the configuration of the reference signal can be improved.

The method for processing a reference signal provided by the embodiment of the disclosure, performed by the base station, may include: in response to a discontinuous reception (DRX) cycle of a UE being greater than the update cycle, sending the indication information of the reference signal at a wake-up moment corresponding to a PO.

The method for processing a reference signal provided by the embodiment of the disclosure, performed by the base station, may include: in response to a DRX cycle of a UE being greater than an availability update cycle, sending the indication information of the reference signal at a wake-up moment corresponding to a PO complementally. In this way, in the embodiment of the disclosure, if the base station sends the indication information of the reference signal, but the UE does not receive the indication information of the reference signal because it has not been awakened, the base station may complementally send the indication information of the reference signal at the wake-up moment corresponding to the PO to the UE, so as to greatly increase the probability that the UE successfully receives the indication information of the reference signal.

In an embodiment, the DRX cycle may be N times as long as the availability update cycle, in which N is an integer greater than 0. For example, the availability update cycle is 320ms and the DRX cycle is 640ms.

In another embodiment, the DRX cycle is greater than the availability update cycle. For example, the availability update cycle is 640ms and the DRX cycle is 700ms.

For example, if the availability update cycle is 320ms and the DRX cycle of the UE is 400ms. The base station sends the indication information of the reference signal at the 1^{st} ms, the 321^{st} ms, and the 641^{st} ms. However, the UE is turned off before the 400^{th} ms, thus the UE misses the indication information of the reference signal sent by the base station at the 1^{st} ms and the 321^{st} ms. When the UE wakes up at the 400ms, the base station can send the indication information of the reference signal for one or more times for complementation at the 400^{th} ms. In this way, the UE may receive the indication information of the reference signal sent by the base station at the 641th ms.

In this way, in the embodiment of the disclosure, if the DRX cycle of the UE is greater than the availability update cycle, the indication information of the reference signal can be sent again at the PO moment, so that the situation in which the UE misses receiving the indication information of the reference signal can be reduced, and the probability that the UE receives the indication information of the reference signal can be increased.

In some embodiments, step S21 includes, but is not limited to, one of:
sending the indication information of the reference signal at least once in an update cycle; and
in response to a DRX cycle of the UE being greater than an availability update cycle, sending the indication information of the reference signal at a wake-up moment corresponding to a PO.

In some embodiments, sending the indication information of the reference signal at least once in one update cycle includes, but is not limited to, one of:
sending the indication information of the reference signal on at least one preset time-frequency domain resource in the update cycle;
sending the indication information of the reference signal on at least one PO in the update cycle;
sending the indication information of the reference signal on at least one time-frequency domain resource that sends a PEI in the update cycle; and
sending the indication information of the reference signal on at least one time-frequency domain resource that sends a paging DCI in the update cycle.

In the embodiment of the disclosure, the indication information of the reference signal may be sent based on one update cycle, so that the UE can receive the correct availability state of the configuration of the reference signal in one update cycle, and the indication information of the reference signal can take effect in the next update cycle.

Moreover, if the DRX cycle of the UE is greater than the update cycle, when the UE misses receiving the indication information of the reference signal, the base station may complementally send the indication information of the reference signal at the wake-up moment corresponding to the PO of the UE, so that the UE can receive the correct availability state of the configuration of the reference signal.

It is noted that those skilled in the art may understand that the method provided by the embodiment of the disclosure may be performed alone or in combination with some methods in the embodiments of the disclosure or some methods in the related art.

As illustrated in FIG. 6, a method for processing a reference signal, performed by a base station, is provided. The method includes the following steps.

At step S61, an effecting mode of the indication information is determined.

In some embodiments of the disclosure, the reference signal may be the reference signal described at step S21, and the indication information may be the indication information described at step S21.

In an embodiment, the effecting mode at step S61 is determining when the indication information of the reference signal starts to take effect, i.e., determining a start time for the indication information of the reference signal to take effect. Certainly, in other embodiments, it may refer to determining a duration in which the indication information of the reference signal takes effect, or an end time of the duration in which the indication information of the reference signal takes effect.

The method for processing a reference signal provided by the embodiment of the disclosure, performed by the base station, may include: determining that the indication information starts to take effect at a preset time point after the UE receives the indication information.

The preset time point herein can be any agreed time point, as long as at least one UE finishes receiving the indication information of the reference signal before the preset time point.

For example, the base station sends the indication information of the reference signal at a first moment, and each UE receives the indication information of the reference signal sent by the base station at a second moment later than the first moment, it can be determined that the indication information of the reference signal starts to take effect at a third moment, which is later than the second moment.

For example, the base station sent the indication information of the reference signal at a first moment, UE 1 receives the indication information of the reference signal sent by the base station at a second moment later than the first moment, UE 2 receives the indication information of the reference signal sent by the base station at a third moment later than the second moment, and UE 3 receives the indication information of the reference signal sent by the base station at a fourth moment later than the third moment, it can be determined that the indication information of the reference signal starts to take effect at a fifth moment, which is later than the fourth moment.

In this way, in the embodiment of the disclosure, the base station determines the preset time after the base station finishes sending the indication information of the reference signal and the at least one UE finishes receiving the indication information of the reference signal as an effecting time point of the indication information of the reference signal, so that the UE can determine the availability state of the configuration of the reference signal based on the indication information of the reference signal, thereby improving the accuracy of the UE in synchronously monitoring the paging.

The method for processing a reference signal provided by the embodiment of the disclosure, performed by the base station, may include: determining that the indication information starts to take effect at a start moment of a next update cycle. In this way, in the embodiment of the disclosure, each UE can receive the correct availability state of the configuration of the reference signal in a previous update cycle, and the availability state of the configuration of the reference signal takes effect in the next update cycle.

The method for processing a reference signal provided by the embodiment of the disclosure, performed by the base station, may include: determining that the indication information starts to take effect at a start moment of a next availability update cycle, in which the availability update cycle is an availability update cycle of the configuration of the reference signal. In this way, in the embodiment of the disclosure, each UE can receive the correct availability state of the configuration of the reference signal in a previous availability update cycle, and the availability state of the configuration of the reference signal takes effect in the next availability update cycle.

The method for processing a reference signal provided by the embodiment of the disclosure, performed by the base station, may include: determining that the indication information starts to take effect at a start moment of a next system information modification cycle. In this way, in the embodiment of the disclosure, each UE can receive the correct availability state of the configuration of the reference signal in a previous system information modification cycle, and the availability state of the configuration of the reference signal takes effect in the next system information modification cycle.

The method for processing a reference signal provided by the embodiment of the disclosure, performed by the base station, may include: in response to a DRX cycle being greater than the availability update cycle, determining that the indication information takes effect within a current extended availability update cycle or that the indication information starts to take effect at a start moment of a next extended availability update cycle, in which the extended availability update cycle is a cycle extended in advance based on the availability update cycle.

In an embodiment, the extended availability update cycle is N times as long as the availability update cycle, where N is an integer greater than 1. For example, the extended availability update cycle is two, three, or four times as long as the availability update cycle.

In another embodiment, the extended availability update cycle is greater than the availability update cycle. For example, the availability update cycle is 640ms, and the extended availability update cycle is 700ms, 750ms, or 2560ms.

In another embodiment, the extended availability update cycle is identical to an extended DRX acquisition period (eDRX acquisition period). The DRX acquisition period is a period specified by the existing standard specification. The DRX acquisition period is greater than the availability update cycle, and the DRX cycle is relatively long, which may be, for example, 2560ms or 3200ms.

For example, the availability update cycle is 320ms, and the DRX cycle of the UE is 400ms. The base station sends the indication information of the reference signal at the 1^{st} ms, the 321^{st} ms and the 640^{th} ms. The UE is turned off before the 400^{th} ms and cannot receive the indication information of the reference signal, thus, the indication information of the reference signal cannot take effect at the 321^{st} ms (i.e., the next availability update cycle).

If the base station determines an extended availability update cycle, e.g. 960ms, based on this availability update cycle of 320ms, the UE is turned on after the 400^{th} ms and can receive the indication information of the reference signal at the 641^{st} ms, and the indication information of the reference signal takes effect at the next extended availability update cycle of 960ms.

If the base station determines an extended availability update cycle, e.g. 2560ms, based on this availability update cycle of 320ms, the UE is turned on after the 400^{th} ms and can receive the indication information of the reference signal the at 641^{st} ms, and the indication information of the reference signal takes effect at the next extended availability update cycle of 2560ms. Moreover, in order to further advance the effecting time of the indication information of the reference signal, the indication information of the reference signal may take effect within the current extended availability update cycle. For example, the indication information of the reference signal starts to take effect when it is received by the UE at the 641^{st} ms, which is within the current extended availability update cycle.

In this way, in the embodiment of the disclosure, when the DRX cycle of the UE is greater than the availability update cycle, the extended availability update cycle that is greater than the availability update cycle may be obtained based on the availability update cycle, and the indication information of the reference signal may take effect within the extended availability update cycle. In this way, all UEs can receive the indication information of the reference signal in a previous extended availability update cycle, and the indication information of the reference signal can take effect in the next extended availability update cycle, or the indication information of the reference signal can take effect in the current extended availability update cycle in which all the UEs receives the indication information of the reference signal.

In some embodiments, step S61 includes, but is not limited to, at least one of:
determining that the indication information starts to take effect at a preset time point after the UE receives the indication information;
determining that the indication information starts to take effect at a start moment of a next update cycle;
determining that the indication information starts to take effect at a start moment of a next availability update cycle, in which the availability update cycle is an availability update cycle of the configuration of the reference signal;
determining that the indication information starts to take effect at a start moment of a next system information modification cycle; and
in response to a DRX cycle being greater than the availability update cycle, determining that the indication information starts to take effect at a start moment of a next extended availability update cycle, in which the extended availability update cycle is a cycle extended in advance based on the availability update cycle.

In the embodiment of the disclosure, the effecting mode of the indication information of the reference signal may be determined, so that the indication information of the reference signal takes effect after at least one UE receives the indication information of the reference signal. For example, each UE may receive the indication information of the reference signal in the previous update cycle, and the indication information of the reference signal takes effect in the next update cycle. In this way, each UE can receive the correct availability state of the configuration of the reference signal and synchronously monitor the paging based on the availability state of the configuration of the reference signal, thereby improving the accuracy of the UE in synchronously monitoring.

It is noted that those skilled in the art can understand that the method provided by the embodiment of the disclosure may be performed alone or in combination with some methods in the embodiments of the disclosure or some methods in the related art.

The following method for processing a reference signal, performed by a UE, is similar to the above method for processing a reference signal, performed by the base station. For technical details not disclosed in the embodiments of the method for processing a reference signal performed by the UE may refer to the description of the examples of the method for processing a reference signal performed by the base station, which will not be described and illustrated in detail herein.

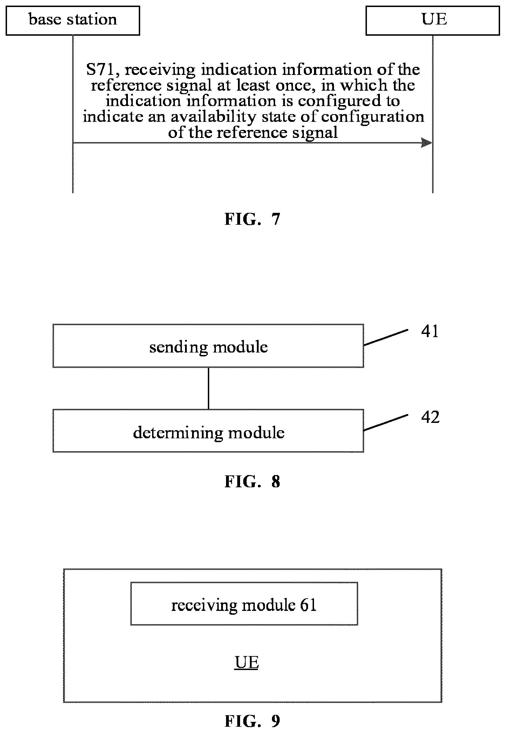

As illustrated in FIG. 7, a method for processing a reference signal, performed by a UE, is provided. The method includes the following steps.

At step S71, indication information of the reference signal is received at least once, in which the indication information is configured to indicate an availability state of configuration of the reference signal.

In an embodiment, the reference signal is used for transmission synchronization between the UE and a base station.

In an embodiment, the reference signal includes but is not limited to one of:
a TRS; or
a CSI-RS.

In an embodiment, the availability state of the configuration of the reference signal includes one of:
an available state;
an unavailable state;
a transition from the available state to the unavailable state; or
a transition from the unavailable state to the available state.

In an embodiment, the indication information is carried in one or more indication bits.

In an embodiment, one indication bit carries indication information of one reference signal or indication information of each reference signal of a plurality of reference signals.

The method for processing a reference signal provided by the embodiment of the disclosure, performed by the UE, may include: receiving the indication information of the reference signal at least once on a specific time-frequency domain resource.

The method for processing a reference signal provided by the embodiment of the disclosure, performed by the UE, may include: receiving the indication information of the reference signal once on a specific time-frequency domain resource in each cycle, or receiving the indication information of the reference signal for multiple times repeatedly on the specific time-frequency domain resource in each cycle.

The method for processing a reference signal provided by the embodiment of the disclosure, performed by the UE, may include: receiving a system information, in which the system information carries resource information of the specific time-frequency domain resource.

The method for processing a reference signal provided by the embodiment of the disclosure, performed by the UE, may include: receiving a physical layer signaling that carries the indication information of the reference signal at least once on the specific time-frequency domain resource.

The method for processing a reference signal provided by the embodiment of the disclosure, performed by the UE, may include, but is not limited to one of:
receiving a paging DCI at least once on the specific time-frequency domain resource, in which the paging DCI carries the indication information of the reference signal;
receiving a PEI at least once on the specific time-frequency domain resource, in which the PEI carries the indication information of the reference signal; or
receiving a PDCCH in a preset format at least once on the specific time-frequency domain resource, in which the PDCCH in the preset format carries the indication information of the reference signal.

The method for processing a reference signal provided by the embodiment of the disclosure, performed by the UE, may include, but is not limited to, one of:
receiving the indication information of the reference signal at least once at a PO;
receiving the indication information of the reference signal at least once on a time-frequency domain resource that sends a PEI; or
receiving the indication information of the reference signal at least once on a time-frequency domain resource that sends a paging DCI.

The method for processing a reference signal provided by the embodiment of the disclosure, performed by the UE, may include: receiving a short message, in which the short message carries the indication information of the reference signal.

The method for processing a reference signal provided by the embodiment of the disclosure, performed by the UE, may include: receiving a PEI or a paging DCI scrambled by a P-RNTI of a preset type, in which the PEI or the paging DCI carries the indication information of the reference signal.

The method for processing a reference signal provided by the embodiment of the disclosure, performed by the UE, may include, but is not limited to, one of:
receiving the indication information of the reference signal at least once in an update cycle; or
in response to a DRX cycle of the UE being greater than the update cycle, receiving the indication information of the reference signal at a wake-up moment corresponding to a PO.

In an embodiment, the update cycle is an availability update cycle of the configuration of the reference signal.

In an embodiment, the update cycle is identical to a system information modification cycle.

The method for processing a reference signal provided by the embodiment of the disclosure, performed by the UE, may include, but is not limited to, one of:
receiving the indication information of the reference signal on a preset time-frequency domain resource in an update cycle;
receiving the indication information of the reference signal on at least one PO in an update cycle;
receiving the indication information of the reference signal on at least one time-frequency domain resource that sends a PEI in an update cycle; and
receiving the indication information of the reference signal on at least one time-frequency domain resource that sends a paging DCI in the update cycle.

It is noted that those skilled in the art can understand that the method provided by the embodiment of the disclosure may be performed alone or in combination with some methods in the embodiments of the disclosure or some methods in the related art.

As illustrated in FIG. 8, an apparatus for processing a reference signal, implemented by a base station, is provided. The apparatus includes:
a sending module 41, configured to send indication information of the reference signal at least once, in which the indication information is configured to indicate an availability state of configuration of the reference signal.

The apparatus for processing a reference signal provided by the embodiment of the disclosure, implemented by the base station, includes:
the sending module 41, configured to send indication information of at least one reference signal, in which the reference signal is configured for transmission synchronization between a UE and the base station, the indication information is configured to indicate an availability state of configuration of the reference signal.

In an embodiment, the reference signal includes, but is not limited to, one of the followings:
a TRS; or
a CSI-RS.

In an embodiment, the availability state of the configuration of the reference signal includes one of:
an available state;
an unavailable state;
a transition from the available state to the unavailable state; or
a transition from the unavailable state to the available state.

In an embodiment, the indication information is configured to indicate one of:
the configuration of the reference signal being available;
the configuration of the reference signal being unavailable; or
the configuration of the reference signal changing from the available state to the unavailable state; and
the configuration of the reference signal changing from the unavailable state to the available state.

In an embodiment, the indication information is carried in one or more indication bits.

In an embodiment, one indication bit carries indication information of one reference signal or indication information of each reference signal of a plurality of reference signals.

The apparatus for processing a reference signal provided by the embodiment of the disclosure, implemented by the base station, may include: the sending module 41, configured to send the indication information of the reference signal at least once on a specific time-frequency domain resource.

The apparatus for processing a reference signal provided by the embodiment of the disclosure, implemented by the base station, may include: the sending module 41, configured to send a system information, in which the system information carries resource information of the specific time-frequency domain resource.

In an embodiment, the specific time-frequency domain resource is configured periodically.

The apparatus for processing a reference signal provided by the embodiment of the disclosure, implemented by the base station, may include: the sending module 41, configured to send a physical layer signaling that carries the indication information of the reference signal.

The apparatus for processing a reference signal provided by the embodiment of the disclosure, implemented by the base station, may include: the sending module 41, configured to send a paging DCI, in which the paging DCI carries the indication information of the reference signal.

The apparatus for processing a reference signal provided by the embodiment of the disclosure, implemented by the base station, may include: the sending module 41, configured to send a PEI, in which the PEI carries the indication information of the reference signal.

The apparatus for processing a reference signal provided by the embodiment of the disclosure, implemented by the base station, may include: the sending module 41, configured to send a PDCCH in a preset format, in which the PDCCH in the preset format carries the indication information of the reference signal.

The apparatus for processing a reference signal provided by the embodiment of the disclosure, implemented by the base station, may include: the sending module 41, configured to send the indication information of the reference signal at least once at a PO.

The apparatus for processing a reference signal provided by the embodiment of the disclosure, implemented by the base station, may include: the sending module 41, configured to send the indication information of the reference signal at least once on a time-frequency domain resource that sends a PEI.

The apparatus for processing a reference signal provided by the embodiment of the disclosure, implemented by the base station, may include: the sending module 41, configured to send the indication information of the reference signal at least once on a time-frequency domain resource that sends a paging DCI.

The apparatus for processing a reference signal provided by the embodiment of the disclosure, implemented by the base station, may include: the sending module 41, configured to send a short message, in which the short message carries the indication information of the reference signal. For example, the indication information of the reference signal is carried via a preset indication bit of the short message.

The apparatus for processing a reference signal provided by the embodiment of the disclosure, implemented by the base station, may include: the sending module 41, configured to send a PEI or a paging DCI scrambled by a P-RNTI of a preset type, in which the PEI or the paging DCI carries the indication information of the reference signal.

The apparatus for processing a reference signal provided by the embodiment of the disclosure, implemented by the base station, may include: the sending module 41, configured to send the indication information of the reference signal at least once in an update cycle.

In some embodiments, the update cycle is an availability update cycle of the configuration of the reference signal.

In some embodiments, the update cycle is identical to a system information modification cycle.

The apparatus for processing a reference signal provided by the embodiment of the disclosure, implemented by the base station, may include: the sending module 41, configured to send the indication information of the reference signal on at least one preset time-frequency domain resource in the update cycle.

The apparatus for processing a reference signal provided by the embodiment of the disclosure, implemented by the base station, may include: the sending module 41, configured to send the indication information of the reference signal on at least one PO in the update cycle.

The apparatus for processing a reference signal provided by the embodiment of the disclosure, implemented by the base station, may include: the sending module 41, configured to send the indication information of the reference signal on at least one time-frequency domain resource that sends a PEI in the update cycle.

The apparatus for processing a reference signal provided by the embodiment of the disclosure, implemented by the base station, may include: the sending module 41, configured to send the indication information of the reference signal on at least one time-frequency domain resource that sends a paging DCI in the update cycle.

In some embodiments, the indication information of the reference signal sent for multiple times in one update cycle are identical.

The apparatus for processing a reference signal provided by the embodiment of the disclosure, implemented by the base station, may include: the sending module 41, configured to, in response to a DRX cycle of the UE being greater than the availability update cycle, send the indication information of the reference signal at a wake-up moment corresponding to the PO.

The apparatus for processing a reference signal provided by the embodiment of the disclosure, implemented by the base station, may include: a determining module 42, configured to determine an effecting mode of the indication information.

The apparatus for processing a reference signal provided by the embodiment of the disclosure, implemented by the base station, may include: the determining module 42, configured to determine that the indication information starts to take effect at a preset time point after the UE receives the indication information.

The apparatus for processing a reference signal provided by the embodiment of the disclosure, implemented by the base station, may include: the determining module 42, configured to determine that the indication information starts to take effect at a start moment of a next update cycle.

The apparatus for processing a reference signal provided by the embodiment of the disclosure, implemented by the base station, may include: the determining module 42, configured to determine that the indication information starts to take effect at a start moment of a next availability update cycle, in which the availability update cycle is an availability update cycle of the configuration of the reference signal.

The apparatus for processing a reference signal provided by the embodiment of the disclosure, implemented by the base station, may include: the determining module 42, configured to determine that the indication information starts to take effect at a start moment of a next system information modification cycle.

The apparatus for processing a reference signal provided by the embodiment of the disclosure, implemented by the base station, may include: the determining module 42, configured to, in response to the DRX cycle being greater than the availability update cycle, determine that the indication information takes effect in a current extended availability update cycle or the indication information starts to take effect at a start moment of a next extended availability update cycle, in which the extended availability update cycle is a cycle extended in advance based on the availability update cycle.

In some embodiments, the extended availability update cycle is identical to an extended DRX acquisition period.

It is noted that those skilled in the art can understand that the method provided by the embodiment of the disclosure may be performed alone or in combination with some methods in the embodiments of the disclosure or some methods in the related art.

Regarding the apparatus in the above embodiments, the specific way in which each module performs its operation has been described in detail in the method embodiments, and will not be described in detail here.

As illustrated in FIG. 9, an apparatus for processing a reference signal, implemented by a UE, is provided. The apparatus includes:
a receiving module 61, configured to receive indication information of the reference signal at least once, in which the indication information is configured to indicate an availability state of configuration of the reference signal.

In an embodiment, the reference signal is configured for transmission synchronization between the UE and a base station.

In an embodiment, the reference signal includes, but is not limited to, one of:
a TRS; or
a CSI-RS.

In an embodiment, the availability state of the configuration of the reference signal includes one of:
an available state;
an unavailable state;
a transition from the available state to the unavailable state; or
a transition from the unavailable state to the available state.

In an embodiment, the indication information is carried in one or more indication bits.

In an embodiment, one indication bits carries indication information of one reference signal or indication information of each reference signal of a plurality of reference signals.

The apparatus for processing a reference signal provided by the embodiment of the disclosure, implemented by the UE, may include:
the receiving module 61, configured to receive the indication information of the reference signal at least once on a specific time-frequency domain resource.

The apparatus for processing a reference signal provided by the embodiment of the disclosure, implemented by the UE, may include:
the receiving module 61, configured to receive the indication information of the reference signal once on a specific time-frequency domain resource in each cycle;
   or,
the receiving module 61, configured to receive the indication information of the reference signal for multiple times repeatedly on the specific time-frequency domain resource in each cycle.

The apparatus for processing a reference signal provided by the embodiment of the disclosure, implemented by the UE, may include:
the receiving module 61, configured to receive a system information, in which the system information carries resource information of the specific time-frequency domain resource.

The apparatus for processing a reference signal provided by the embodiment of the disclosure, implemented by the UE, may include:
the receiving module 61, configured to receive a physical layer signaling that carries the indication information of the reference signal at least once on the specific time-frequency domain resource.

The apparatus for processing a reference signal provided by the embodiment of the disclosure, implemented by the UE, may include: the receiving module 61, configured to execute one of:
receiving a paging DCI at least once on the specific time-frequency domain resource, in which the paging DCI carries the indication information of the reference signal;
receiving a PEI at least once on the specific time-frequency domain resource, in which the PEI carries the indication information of the reference signal; or
receiving a PDCCH in a preset format at least once on the specific time-frequency domain resource, in which the PDCCH in the preset format carries the indication information of the reference signal.

The apparatus for processing a reference signal provided by the embodiment of the disclosure, implemented by the UE, may include, but is not limited to, one of:
receiving the indication information of the reference signal at least once at a PO;
receiving the indication information of the reference signal at least once on a time-frequency domain resource that sends a PEI; or
receiving the indication information of the reference signal at least once on a time-frequency domain resource that sends a paging DCI.

The apparatus for processing a reference signal provided by the embodiment of the disclosure, implemented by the UE, may include:
the receiving module 61, configured to receive a short message, in which the short message carries the indication information of the reference signal.

The apparatus for processing a reference signal provided by the embodiment of the disclosure, implemented by the UE, may include:
the receiving module 61, configured to receive a PEI or a paging DCI scrambled by a P-RNTI of a preset type, in which the PEI or the paging DCI carries the indication information of the reference signal.

The apparatus for processing a reference signal provided by the embodiment of the disclosure, implemented by the UE, may include: the receiving module 61, configured to execute one of:
receiving the indication information of the reference signal at least once in an update cycle; or
in response to a DRX cycle of the UE being greater than the update cycle, receiving the indication information of the reference signal at a wake-up moment corresponding to the PO.

In an embodiment, the update cycle is an availability update cycle of the configuration of the reference signal.

In an embodiment, the update cycle is identical to a system information modification cycle.

The apparatus for processing a reference signal provided by the embodiment of the disclosure, implemented by the UE, may include: the receiving module 61, configured to execute one of:
receiving the indication information of the reference signal on a preset time-frequency domain resource in an update cycle;
receiving the indication information of the reference signal on at least one PO in the update cycle;
receiving the indication information of the reference signal on at least one time-frequency domain resource that sends a PEI in the update cycle; or
receiving the indication information of the reference signal on at least one time-frequency domain resource that sends a paging DCI in the update cycle.

It is noted that those skilled in the art may understand that the apparatus provided by the embodiment of the disclosure may be performed alone or in combination with some apparatuses in the embodiments of the disclosure or some apparatuses in the related art.

Regarding the apparatus in the above embodiments, the specific way in which each module performs its operation has been described in detail in the method embodiments, and will not be described in detail here.

The embodiment of the disclosure provides a communication device. The communication device includes:
a processor;
a memory for storing instructions executable by the processor; in which
the processor is configured to run the executable instructions to implement the method for processing a reference signal of any embodiment of the disclosure.

In an embodiment, the communication device may be a base station. In another embodiment, the communication device is a UE.

In an embodiment, the communication device may also be a network side entity, such as a core network entity.

The processor may include various types of storage mediums, such as non-transitory computer storage mediums, to continue to memorize information stored thereon after the UE is powered down.

The processor may be connected to the memory via a bus or the like for reading executable programs stored on the memory, for example, at least one of the methods shown in FIGS. 2 to 7.

The embodiments of the disclosure also provide a computer storage medium having computer executable programs stored thereon. When the executable programs are executed by a processor, the method for processing a reference signal of any embodiment of the disclosure is implemented, for example, at least one of the methods as shown in FIGS. 2 to 7.

Regarding the device or storage medium in the above embodiments, the specific way in which each module performs its operation has been described in detail in the method embodiments, and will not be described in detail here.

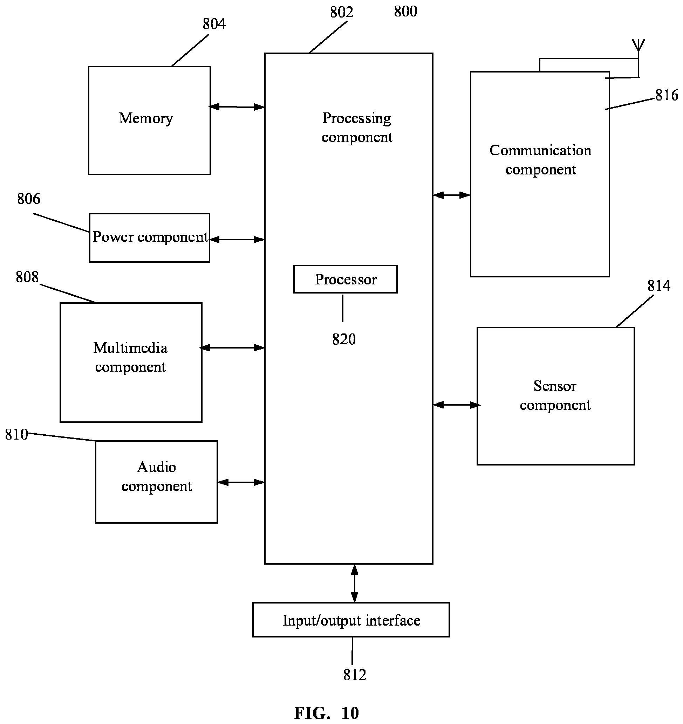

FIG. 10 is a block diagram illustrating a UE 800 according to an embodiment. For example, the UE 800 may be a mobile phone, a computer, a digital broadcasting UE, a message transceiver device, a game console, a tablet device, a medical device, a fitness device and a personal digital assistant.

As illustrated in FIG. 10, the UE 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the UE 800, such as the operations associated with display, telephone calls, data communication, camera operations, and recording operations. The processing component 802 may include one or more processors 820 to perform all or part of the steps in the above described method. Moreover, the processing component 802 may include one or more modules which facilitate the interaction between the processing component 802 and other components. For example, the processing component 802 may include a multimedia module to facilitate the interaction between the multimedia component 808 and the processing component 802.

The memory 804 is configured to store various types of data to support the operation of the UE 800. Examples of such data include instructions for any applications or methods operated on the UE 800, contact data, phonebook data, messages, pictures, video, etc. The memory 804 may be implemented using any type of volatile or non-volatile memory devices, or a combination thereof, such as a Static Random-Access Memory (SRAM), an Electrically-Erasable Programmable Read Only Memory (EEPROM), an Erasable Programmable Read Only Memory (EPROM), a Programmable Read Only Memory (PROM), a Read Only Memory (ROM), a magnetic memory, a flash memory, a magnetic or optical disk.

The power component 806 provides power to various components of the UE 800. The power component 806 may include a power management system, one or more power sources, and any other components associated with the generation, management, and distribution of power in the UE 800.

The multimedia component 808 includes a screen providing an output interface between the UE 800 and the user. In some embodiments, the screen may include a Liquid Crystal Display (LCD) and a Touch Panel (TP). If the screen includes the touch panel, the screen may be implemented as a touch screen to receive input signals from the user. The touch panel includes one or more touch sensors to sense touches, swipes, and gestures on the touch panel. The touch sensor may not only sense a boundary of a touch or swipe action, but also sense a period of time and a pressure associated with the touch or swipe action. In some embodiments, the multimedia component 808 includes a front-facing camera and/or a rear-facing camera. When the UE 800 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 810 is configured to output and/or input audio signals. For example, the audio component 810 includes a microphone (MIC) configured to receive an external audio signal when the UE 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the UE 800. For instance, the sensor component 814 may detect an open/closed status of the UE 800, relative positioning of components, e.g., the display and the keypad, of the UE 800, a change in position of the UE 800 or a component of the UE 800, a presence or absence of user contact with the UE 800, an orientation or an acceleration/deceleration of the UE 800, and a change in temperature of the UE 800. The sensor component 814 may include a proximity sensor configured to detect the presence of nearby objects without any physical contact. The sensor component 814 may also include a light sensor, such as a Complementary Metal Oxide Semiconductor (CMOS) or Charge-Coupled Device (CCD) image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the UE 800 and other devices. The UE 800 can access a wireless network based on a communication standard, such as Wi-Fi, 2G or 3G, or a combination thereof. In an embodiment, the communication component 816 receives a broadcast signal from an external broadcast management system or broadcast associated information via a broadcast channel. In an exemplary embodiment, the communication component 816 further includes a Near Field Communication (NFC) module to facilitate short-range communication. For example, the NFC module may be implemented based on a Radio Frequency Identification (RFID) technology, an Infrared Data Association (IrDA) technology, an Ultra-Wide Band (UWB) technology, a Blue Tooth (BT) technology, and other technologies.

In the exemplary embodiment, the UE 800 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, for performing the above described method.

In the exemplary embodiment, there is also provided a non-transitory computer readable storage medium including instructions, such as the memory 804. The instructions may be executed by the processor 820 in the UE 800, for performing the above method. For example, the non-transitory computer-readable storage medium may be a ROM, a Random Access Memory (RAM), a CD-ROM, a magnetic tape, a floppy disc, and an optical data storage device.

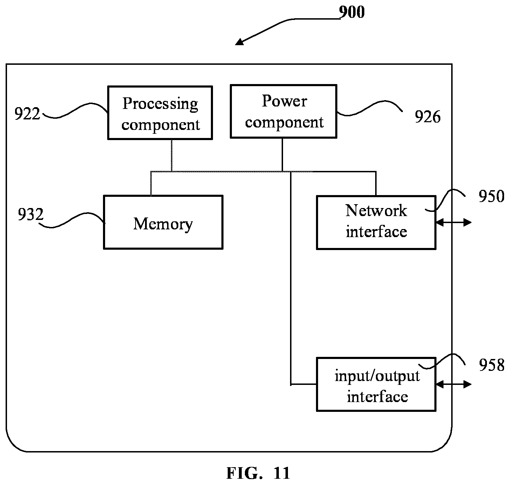

FIG. 11 is a block diagram illustrating a base station 900 according to an embodiment. For example, the base station 900 may be provided as a network side device. As illustrated in FIG. 11, the base station 900 includes a processing component 922 consisting of one or more processors, and memory resources represented by a memory 932 for storing instructions that may be executed by the processing component 922, such as application programs. The application programs stored in the memory 932 may include one or more modules each corresponding to a set of instructions. In addition, the processing component 922 is configured to execute the instructions to perform any of the methods described above that are performed by the base station, for example, the methods shown in FIGS. 4 to 10.

The base station 900 may also include a power component 926 configured to perform power management of the base station 900, a wired or wireless network interface 950 configured to connect the base station 900 to a network, and an input-output (I/O) interface 958. The base station 900 may operate based on an operating system stored in the memory 932, such as Windows Server TM, Mac OS XTM, UnixTM, LinuxTM, FreeBSDTM, or the like.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art. It is intended that the specification and embodiments are considered as illustrative only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A method for processing a reference signal, performed by a base station, comprising:
sending indication information of the reference signal at least once, wherein the indication information is configured to indicate an availability state of configuration of the reference signal.

2. The method of claim 1, wherein the reference signal comprises at least one of:
a tracking reference signal (TRS); or
a channel state information-reference signal (CSI-RS).

3. The method of claim 1 or 2, wherein the availability state of the configuration of the reference signal comprises one of:
an available state;
an unavailable state;
a transition from the available state to the unavailable state; or
a transition from the unavailable state to the available state.

4. The method of any one of claims 1-3, wherein the indication information is carried in one or more indication bits.

5. The method of claim 4, wherein one of the one or more indication bits carries indication information of one reference signal or indication information of each reference signal of a plurality of reference signals.

6. The method of any one of claims 1-5, wherein sending the indication information of the reference signal at least once comprises:
sending the indication information of the reference signal at least once on a specific time-frequency domain resource.

7. The method of claim 6, further comprising:
sending a system information, wherein the system information carries resource information of the specific time-frequency domain resource.

8. The method of claim 6 or 7, wherein the specific time-frequency domain resource is configured periodically.

9. The method of claim 6-8, wherein sending the indication information of the reference signal at least once comprises:
sending a physical layer signaling carrying the indication information of the reference signal.

10. The method of claim 9, wherein sending the physical layer signaling carrying the indication information of the reference signal comprises at least one of:
sending a paging downlink control information (DCI), wherein the paging DCI carries the indication information of the reference signal;
sending a paging early indication (PEI), wherein the PEI carries the indication information of the reference signal; or
sending a physical downlink control channel (PDCCH) in a preset format, wherein the PDCCH in the preset format carries the indication information of the reference signal.

11. The method of any one of claims 1-5, wherein sending the indication information of the reference signal at least once comprises at least one of:
sending the indication information of the reference signal at least once at a paging occasion (PO);
sending the indication information of the reference signal at least once on a time-frequency domain resource that sends a PEI; or
sending the indication information of the reference signal at least once on a time-frequency domain resource that sends a paging DCI.

12. The method of claim 11, wherein sending the indication information of the reference signal at least once comprises:
sending a short message, wherein the short message carries the indication information of the reference signal.

13. The method of claim 11, wherein sending the indication information of the reference signal at least once comprises:
sending a PEI or a paging DCI scrambled by a paging radio network temporary identifier (P-RNTI) of a preset type, wherein the PEI or the paging DCI carries the indication information of the reference signal.

14. The method of any one of claims 1-13, wherein sending the indication information of the reference signal at least once comprises:
sending the indication information of the reference signal at least once in an update cycle.

15. The method of claim 14, wherein the update cycle is an availability update cycle of the configuration of the reference signal.

16. The method of claim 15, wherein the update cycle is identical to a system information modification cycle.

17. The method of any one of claims 14-15, wherein sending the indication information of the reference signal at least once in the update cycle comprises at least one of:
sending the indication information of the reference signal on at least one preset time-frequency domain resource in the update cycle;
sending the indication information of the reference signal on at least one PO in the update cycle;
sending the indication information of the reference signal on at least one time-frequency domain resource that sends a PEI in the update cycle; or
sending the indication information of the reference signal on at least one time-frequency domain resource that sends a paging DCI in the update cycle.

18. The method of any one of claims 14-17, wherein the indication information of the reference signal sent for a plurality of times in the update cycle are identical.

19. The method of claim 14, wherein sending the indication information of the reference signal at least once comprises:
in response to a discontinuous reception (DRX) cycle of a user equipment (UE) being greater than the update cycle, sending the indication information of the reference signal at a wake-up moment corresponding to a PO.

20. The method of any one of claims 1-19, further comprising:
determining an effecting mode of the indication information.

21. The method of claim 20, wherein determining the effecting mode of the indication information comprises:
determining that the indication information takes effect at a preset time point after the UE receives the indication information.

22. The method of claim 20 or 21, wherein determining the effecting mode of the indication information comprises at least one of:
determining that the indication information takes effect at a start moment of a next update cycle;
determining that the indication information takes effect at a start moment of a next availability update cycle, wherein the availability update cycle is an availability update cycle of the configuration of the reference signal;
determining that the indication information takes effect at a start moment of a next system information modification cycle; or
in response to a DRX cycle being greater than the availability update cycle, determining that the indication information takes effect at a start moment of a next extended availability update cycle, wherein the extended availability update cycle is a cycle extended in advance based on the availability update cycle.

23. The method of claim 22, wherein the extended availability update cycle is identical to an extended DRX acquisition period.

24. A method for processing a reference signal, performed by a UE, comprising:
receiving indication information of the reference signal at least once, wherein the indication information is configured to indicate an availability state of configuration of the reference signal.

25. The method of claim 24, wherein the reference signal comprises at least one of:
a TRS; or
a CSI-RS.

26. The method of claim 24 or 25, wherein receiving the indication information of the reference signal at least once comprises:
receiving the indication information of the reference signal at least once on a specific time-frequency domain resource.

27. The method of any one of claims 24-26, wherein receiving the indication information of the reference signal at least once comprises at least one of:
receiving the indication information of the reference signal at least once at a PO;
receiving the indication information of the reference signal at least once on a time-frequency domain resource that sends a PEI; or
receiving the indication information of the reference signal at least once on a time-frequency domain resource that sends a paging DCI.

28. An apparatus for processing a reference signal, implemented by a base station, comprising:
a sending module, configured to send indication information of the reference signal at least once, wherein the indication information is configured to indicate an availability state of configuration of the reference signal.

29. The apparatus of claim 28, wherein the reference signal comprises at least one of:
a TRS; or
a CSI-RS.

30. The apparatus of claim 28 or 29, wherein the availability state of the configuration of the reference signal comprises one of:
an available state;
an unavailable state;
a transition from the available state to the unavailable state; or
a transition from the unavailable state to the available state.

31. The apparatus of any one of claims 28-30, wherein the indication information is carried in one or more indication bits.

32. The apparatus of claim 31, wherein one of the one or more indication bits carries indication information of one reference signal or indication information of each reference signal of a plurality of reference signals.

33. The apparatus of any one of claims 28-32, wherein the sending module is configured to send the indication information of the reference signal at least once on a specific time-frequency domain resource.

34. The apparatus of claim 33, wherein the sending module is configured to send a system information, wherein the system information carries resource information of the specific time-frequency domain resource.

35. The apparatus of claim 33 or 34, wherein the specific time-frequency domain resource is configured periodically.

36. The apparatus of claims 33-35, wherein the sending module is configured to send a physical layer signaling carrying the indication information of the reference signal.

37. The apparatus of claim 36, wherein the sending module is configured to execute at least one of:
sending a paging DCI, wherein the paging DCI carries the indication information of the reference signal;
sending a PEI, wherein the PEI carries the indication information of the reference signal; or
sending a PDCCH in a preset format, wherein the PDCCH in the preset format carries the indication information of the reference signal.

38. The apparatus of any one of claims 28-32, wherein the sending module is configured to execute at least one of:
sending the indication information of the reference signal at least once at a PO;
sending the indication information of the reference signal at least once on a time-frequency domain resource that sends a PEI; or
sending the indication information of the reference signal at least once on a time-frequency domain resource that sends a paging DCI.

39. The apparatus of claim 38, wherein the sending module is configured to send a short message, wherein the short message carries the indication information of the reference signal.

40. The apparatus of claim 38, wherein the sending module is configured to send a PEI or a paging DCI scrambled by a P-RNTI of a preset type, wherein the PEI or the paging DCI carries the indication information of the reference signal.

41. The apparatus of any one of claims 28-40, wherein the sending module is configured to send the indication information of the reference signal at least once in an update cycle.

42. The apparatus of claim 41, wherein the update cycle is an availability update cycle of the configuration of the reference signal.

43. The apparatus of claim 42, wherein the update cycle is identical to a system information modification cycle.

44. The apparatus of any one of claims 41-42, wherein the sending module is configured to execute at least one of:
sending the indication information of the reference signal on at least one preset time-frequency domain resource in the update cycle;
sending the indication information of the reference signal on at least one PO in the update cycle;
sending the indication information of the reference signal on at least one time-frequency domain resource that sends a PEI in the update cycle; or
sending the indication information of the reference signal on at least one time-frequency domain resource that sends a paging DCI in the update cycle.

45. The apparatus of any one of claims 41-44, wherein the indication information of the reference signal sent for a plurality of times in the update cycle are identical.

46. The apparatus of claim 42, wherein the sending module is configured to: in response to a DRX cycle of the UE being greater than the update cycle, send the indication information of the reference signal at a wake-up moment corresponding to a PO.

47. The apparatus of any one of claims 28-46, further comprising:
a determining module, configured to determine an effecting mode of the indication information.

48. The apparatus of claim 47, wherein the determining module is configured to determine that the indication information takes effect at a preset time point after the UE receives the indication information.

49. The apparatus of claim 46 or 48, wherein the determining module is configured to execute at least one of:
determining that the indication information takes effect at a start moment of a next update cycle;
determining that the indication information takes effect at a start moment of a next availability update cycle, wherein the availability update cycle is an availability update cycle of the configuration of the reference signal;
determining that the indication information takes effect at a start moment of a next system information modification cycle; or
in response to a DRX cycle being greater than the availability update cycle, determining that the indication information takes effect at a start moment of a next extended availability update cycle, wherein the extended availability update cycle is a cycle extended in advance based on the availability update cycle.

50. The apparatus of claim 49, wherein the extended availability update cycle is identical to an extended DRX acquisition period.

51. An apparatus for processing a reference signal, implemented by a UE, comprising:
a receiving module, configured to receive indication information of the reference signal at least once, wherein the indication information is configured to indicate an availability state of configuration of the reference signal.

52. The apparatus of claim 52, wherein the reference signal comprises at least one of:
a TRS; or
a CSI-RS.

53. The apparatus of claim 51 or 52, wherein the receiving module is configured to receive the indication information of the reference signal at least once on a specific time-frequency domain resource.

54. The apparatus of any one of claims 51-53, wherein the receiving module is configured to execute at least one of:
receiving the indication information of the reference signal at least once at a PO;
receiving the indication information of the reference signal at least once on a time-frequency domain resource that sends a PEI; or
receiving the indication information of the reference signal at least once on a time-frequency domain resource that sends a paging DCI.

55. A communication device, comprising:
a processor;
a memory for storing instructions executable by the processor; wherein
the processor is configured to run the executable instructions to implement the method for processing a reference signal of any one of claims 1 to 23 or the method for processing a reference signal of any one of claims 24 to 27.

56. A computer storage medium having computer executable programs stored thereon, wherein when the executable programs are executed by a processor, the method for processing a reference signal of any one of claims 1 to 23 or the method for processing a reference signal of any one of claims 24 to 27 is implemented.
